# EUROPEAN PATENT SPECIFICATION

(11) **EP 1 353 425 B1**
(45) Date of publication and mention of the grant of the patent: **22.11.2006**
(21) Application number: 02021201.5
(22) Date of filing: 18.09.2002
(51) Int. Cl.: H02B 11/133

(54) **Drawer-type circuit breaker**
Einschub-Leistungsschalter
Disjoncteur enfichable

(30) Priority: 12.04.2002 JP 2002110615
(43) Date of publication of application: 15.10.2003
(73) Proprietor: MITSUBISHI DENKI KABUSHIKI KAISHA, Chiyoda-ku Tokyo 100-8310 (JP)
(72) Inventor: Tokunaga, Yoshihiro, Mitsubishi Electric Engineer., Chiyoda-ku, Tokyo 100-0004 (JP); Genba, Yasushi, Mitsubishi Electric Eng. K. K., Chiyoda-ku, Tokyo 100-0004 (JP)
(74) Representative: HOFFMANN EITLE

(56) References cited:
- EP-A- 0 532 838
- EP-A- 0 536 573

## Description

### Background of the Invention

### 1. Field of the Invention

The present invention relates to a drawer-type circuit breaker that is mounted on a switchboard and the like and is capable of detaching a circuit breaker accommodated in an internal part thereof when required.

EP-A-0 536 573 discloses in combination the technical features of the pre-characterizing part of claim 1 below.

### 2. Background Art

In conventional drawer-type circuit breakers, as disclosed in, for example, the Japanese Patent Publication (unexamined) No. 271623/1998, the Japanese Utility Model Application Publication (unexamined) No. 68275/1994, the Japanese Patent Publication (unexamined) No. 84851/1975 and the like, a manipulation handle is inserted in an insertion hole of the circuit breaker and turned, whereby a drawer screw forming a drawer mechanism turns, a drawer rail extends, and a circuit breaker can be taken in and out of a drawer frame. By such taking in and out, a body side conductor of the circuit breaker and a drawer frame side conductor of the drawer frame are brought into contact or separated.

In the conventional drawer-type circuit breakers of above construction, a problem exists in that the circuit breaker can be drawn out even when contact points thereof are in a closed state in spite of trying to open the open/close mechanism due to fusion of the contact points of the circuit breaker or due to non-operation of an open/close mechanism, thus, the body side conductor and the drawer frame side conductor are brought into separation under the conductive

### Summary of the Invention

The present invention was made to solve the above-discussed problem and has an object of providing a drawer-type circuit breaker in which a circuit breaker cannot be drawn out so long as contact points thereof are closed despite of opening operation of the open/close mechanism.

To accomplish the foregoing object, a drawer-type circuit breaker according to the present invention includes: a circuit breaker in which ON operation of an open/close mechanism causes a link mechanism to extend, thereby moving a movable contact to an ON position where a movable contact and a stationary contact come in contact under a predetermined contact pressure, and OFF operation of the mentioned open/close mechanism causes a force of constraint between the mentioned link mechanism and a trip latch based on the mentioned contact pressure to be released, thereby bending the mentioned link mechanism and moving the mentioned movable contact to OFF position; a drawer frame retractably accommodating the mentioned circuit breaker; and a drawer mechanism section enabling the mentioned circuit breaker to move in pulling-out direction and inserting direction within a drawer frame by inserting a manipulation handle from outside and operating the manipulation handle. In this drawer-type circuit breaker, a blocking member for preventing insertion of the mentioned manipulation handle when the mentioned movable contact is at the ON position.

As a result of such construction, the invention can provide a drawer-type circuit breaker in which the mentioned circuit breaker cannot be drawn out so long as the contact points are closed in spite of an opening operation of the mentioned open/close mechanism.

### Brief Description of the Drawings

Fig. 1 is a perspective view of a drawer-type circuit breaker according to a first preferred embodiment of the present invention.
Fig. 2 is an explanatory view showing an essential part of Fig. 1, illustrating an OFF state.
Fig. 3 is a side view of the mechanism side being in the OFF state of the circuit breaker shown in Fig. 1.
Fig. 4 is a side view of the mechanism side being in an ON state of the circuit breaker as well as in a state of having completed charge.
Fig. 5 is a side view of the mechanism side being in the ON state of the circuit breaker shown in Fig. 1.
Fig. 6 is a front view corresponding to Fig. 5.
Fig. 7 is a side view of the mechanism side being in the OFF state of the circuit breaker shown in Fig. 1.
Fig. 8 is an enlarged view showing an essential part of Fig. 7.
Fig. 9 is a side view of the mechanism side being in a state in which contact points of the circuit breaker of Fig. 1 are fused.
Fig. 10 is an enlarged view showing an essential part of Fig. 9.
Fig. 11 is a top view of a handle lock pin shown in Figs. 5 to 10.

### Description of the Preferred Embodiments

### Embodiment 1.

A first preferred embodiment according to this present invention is hereinafter described.

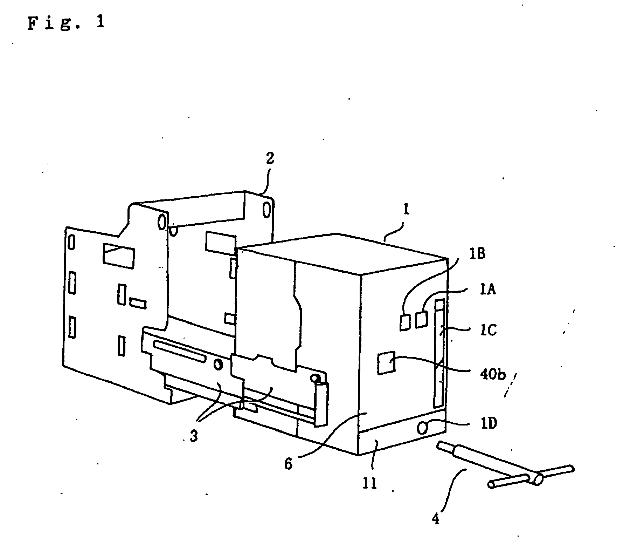

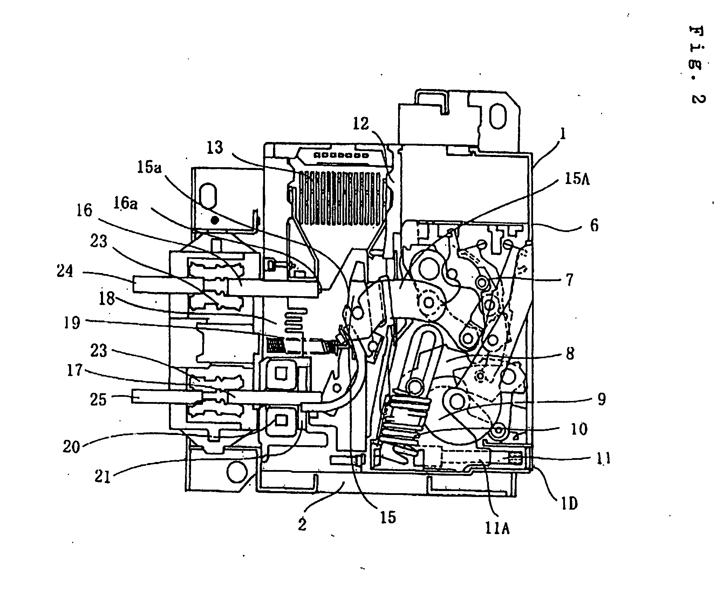

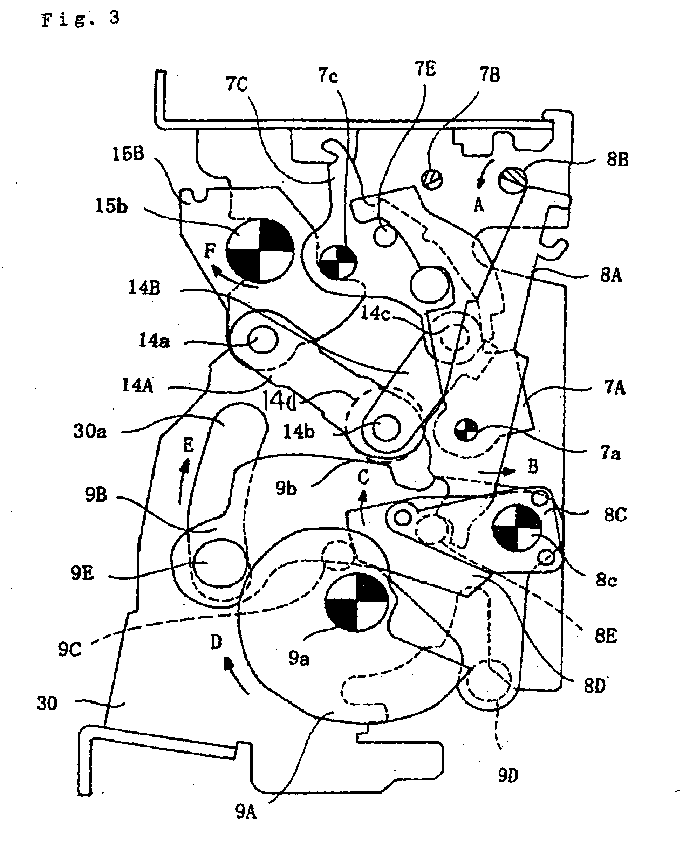

Fig. 1 is a perspective view showing a drawer-type circuit breaker according to a first embodiment of this invention. Fig. 2 is an explanatory view showing an essential part of Fig. 1 being in an OFF state, which shows a partially sectional configuration in which a frame 30 shown on and after Fig. 3 is removed for reason of easy understanding.. Referring to Fig. 1, reference numeral 1 designates a circuit breaker, numeral 2 designates a drawer frame, and numeral 3 designates a retractable drawer rail provided at the drawer frame 2, and on which the circuit breaker 1 is mounted at one end thereof. Numeral 4 designates a drawer handle. Numeral 1A designates an ON button for operating a turning-on mechanism 8 (Fig. 2) and turning on a movable conductor 15 (Fig. 2). Numeral 1B designates an OFF button for operating a release mechanism 7 (Fig. 2) and releasing the movable conductor 15. Numeral 1C designates a charge handle for manually charging a charge mechanism 9 (Fig. 2). Numeral 6 designates a cover for the circuit breaker 1. Numeral 11 designates a drawer mechanism. Numeral 40b designates a display part for displaying ON/OFF state of the movable conductor 15 (Fig. 2).

When inserting the circuit breaker 1 in the drawer frame 2 from an extended state shown in Fig. 1 to a predetermined position and then turning the drawer handle 4 inserted through an insertion hole 1D clockwise in Fig. 1, the drawer rail 3 is retracted, thereby the circuit breaker 1 is inserted in the drawer frame 2. Thus body side conductors 16, 17 of the circuit breaker 1 are press-fitted to main circuit junctions 23, 23 (Fig. 2) of the drawer frame 2 and electrically connected, eventually coming to an inserted state as shown in Fig. 2. On the other hand, when turning the drawer handle 4 counterclockwise in Fig. 1 from the inserted state shown in Fig. 2, the drawer rail 3 is extended, the circuit breaker 1 is drawn out of the drawer frame 2 to a predetermined position, and the body side conductors 16, 17 and the main circuit junctions 23, 23 are brought into an electrical disconnection. Thereafter, the circuit breaker 1 comes to a drawn-out state as shown in Fig. 1 by pulling out the circuit breaker 1 out of the drawer frame 2.

Referring to Fig. 2, numeral 6 designates a cover, and numeral 7 designates a release mechanism for releasing a movable conductor 15, that is, causing a movable contact 15a to be separated from a stationary contact 16a. Numeral 8 designates a turning-on mechanism for turning on the movable conductor 15, that is, causing the movable contact 15a to come in contact with the stationary contact 16a. Numeral 9 designates a charge mechanism in which a closing spring 10 is compressed by means of an electric motor not shown, or manually with the charge handle 1c. Numeral 11 designates a drawer mechanism for moving the circuit breaker 1 by turning a main screw 11A that engages with the drawer handle 4. Numeral 12 designates an intermediate base for separating a mechanism side, in which the release mechanism of the circuit breaker 1, the turning-on mechanism 8, the charge mechanism 9 and the like are accommodated, from an arc-suppressing side in which the movable contact 15a, the stationary contact 16a and the like are accommodated.

Numeral 13 designates an arc-suppressing chamber including a deion grid for arc-suppressing arc generated between the movable contact 15a and the stationary contact 16a. Numeral 15 designates a movable conductor to which the movable contact 15a is fixed. Numeral 16 designates a body side conductor to which a stationary contact 16a is fixed at one end thereof opposite to the movable contact 15a, and the other end of which is formed so as to protrude outside of the circuit breaker 1. Numeral 17 designates a body side conductor one end of which is connected to a flexible conductor electrically connected to the movable conductor 15, and the other end of which is provided so as to protrude outside of the circuit breaker 1. Numeral 18 designates a base to which the body side conductors 16, 17 and the like are fixed. Numeral 19 designates a contact pressure spring for giving an impetus to the movable conductor 15 in opening direction when the circuit breaker 1 is in an ON state. Numeral 20 designates a power supply CT (current transfer) for an over current release device (not shown) for operating the release mechanism 7 when detecting any over current. Numeral 21 designates a current detecting CT for detecting the over current.

Numeral 23 designates a main circuit junction that is provided at the drawer frame 2, and fixed to drawer frame side conductors 24, 25. The body side conductors 16, 17 are press-fitted to the main circuit junctions 23, 23 and electrically connected thereto by inserting the circuit breaker 1 due to the turning of the drawer handle 4 as mentioned above. Under the state as shown in Fig. 2, the drawer frame side conductor 24, the main circuit junction 23, the body side conductor 16, the stationary contact 16a, the movable contact 15a, the movable conductor 15, the flexible conductor, the body side conductor 17, the main circuit junction 23 and the drawer frame side conductor 25 form a cable way (electrical path). This cableway is brought into a state of conduction or non-conduction by opening and closing the movable conductor 15.

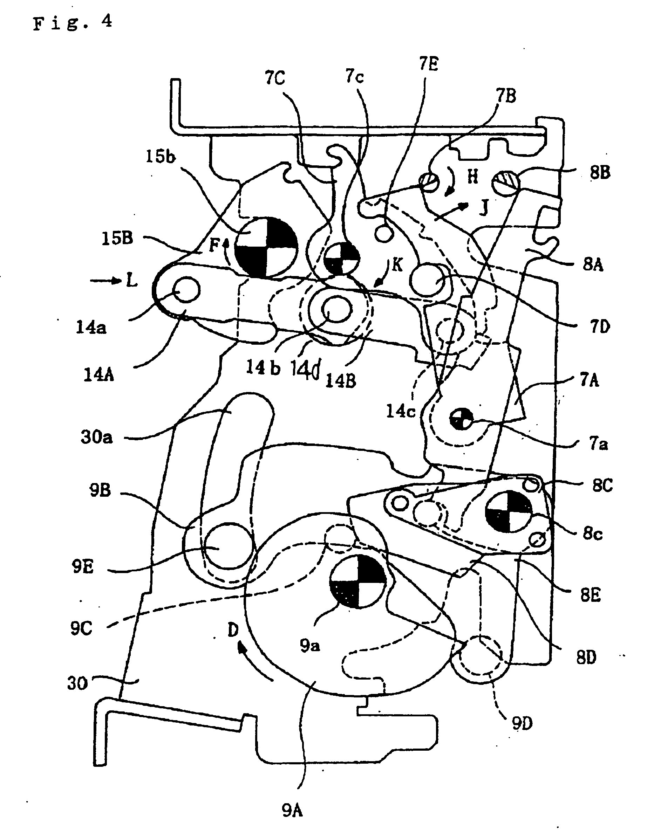

Now, the mechanism side of the circuit breaker 1 is described. Fig. 3 is a side view of the mechanism side being in an OFF state of the circuit breaker shown in Fig. 1. Fig. 4 is a side view of the mechanism side being in an ON state of the circuit breaker as well as in a state of having completed charge.

Numeral 30 designates a plate-shaped frame made of metal. Only one piece of plate is shown in Figs. 3 and 4, however, another frame 30 is disposed on this of a page space of the drawings. The release mechanism 7, the turning-on mechanism 8, the charge mechanism 9 and the like are sandwiched between these two pieces of frames 30, and a pair of closing springs 10 (Fig. 2) are disposed outside of the two pieces of frames 30.

With reference to Fig. 3, ON operation is described.
(1 - 1) Under the OFF state shown in Fig. 3, when depressing the ON button 1A (Fig. 1), a close bar 8B having a semilunar cross section turns in a direction indicated by an arrow A, whereby engagement with a first close latch 8A is released (disengaged).

(1 - 2) Then, the first close latch 8A turns in a direction indicated by an arrow B round a shaft 7a by contraction of an impetus-giving spring not shown, and engagement thereof with a roller 8E fixed to a second close latch 8C and a third close latch 8D is released.

(1 - 3) Then, the second close latch 8C and the third close latch 8D turns in a direction indicated by an arrow C round a shaft 8c by contradiction of the impetus-giving spring not shown, and engagement with a cam roller 9C fixed to a cam 9A is released.

(1 - 4) Then, the cam 9A turns in a direction indicated by an arrow D round a shaft 9a by extension of the closing spring 10 (Fig. 2).

(1 - 5) At the same time, a main spring pin 9E, to two ends of which the closing springs 10 are connected, moves in a direction indicated by an arrow E within a guide slot 30a. A charge arm 9B fixed to the main spring pin 9E turns in a direction indicated by an arrow C round the shaft 8c. Then, an abutment portion 9b of the charge arm 9B is brought into contact with a roller 14d provided rotatably round a shaft 14b, thereby a link bottom 14A and a link top 14B being extended.

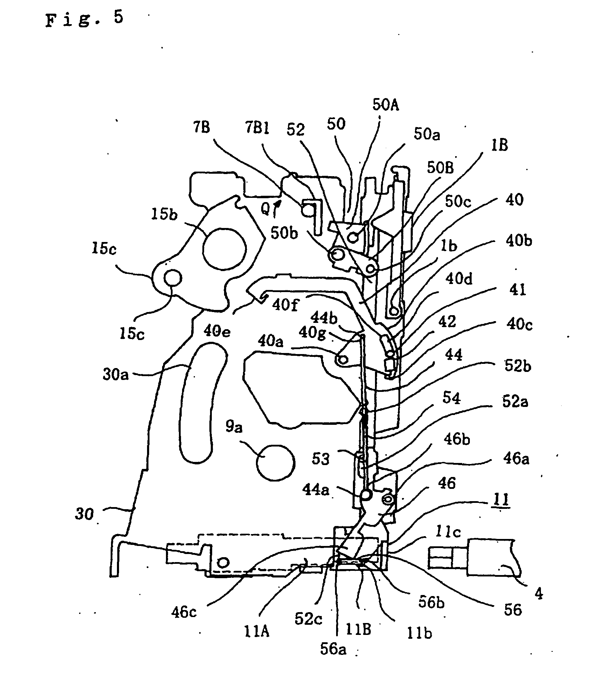

(1 - 6) At this time, the link bottom 14A and the link top 14B turn using the shafts 14a, 14b and 14c as articulations, thereby turning a first arm 15B and a main shaft 15b in a direction indicated by an arrow F. Thus a second arm 15c (Fig. 5) also turns. The second arm 15c is fixed to the main shaft 15b and causes the movable conductor 15 to turn through the link 15A (Fig. 2). Thus the movable conductor 15 turns to an ON position so that a predetermined contact pressure may be exerted between the movable contact 15a and the stationary contact 16a. Further, the link bottom 14A and the link top 14B come to extend, the pin 14c moves in a direction indicated by an arrow L (Fig. 4), and a tip end of a trip latch 7A engages with a trip bar 7B, thereby the movement being stopped. Under such a state, a force of constraint based on a contact pressure exerted by the contact pressure spring 19 acts (in vertical direction in Fig. 4) between the roller 7D and the trip latch 7A.

(1 - 7) Subsequently, a charge cam 9A turns in a direction indicated by an arrow D round a shaft 9a until a cam roller 9C comes in contact with the third close latch 8D, and a charge arm roller 9D moves along the outer periphery of the charge cam 9A. Thus the closing spring 10 (Fig. 2) is charged, and the turning-on mechanism 8 is caused to move to the state shown in Fig. 3. This is the ON state shown in Fig. 4.

Now OFF operation is described with reference to Fig. 4.
(2 - 1) Under the ON state shown in Fig. 4, when depressing the OFF button 1B (Fig. 1), an off lever 50 (Fig. 5) comes in contact with an engagement member 7B1 (Fig. 5) mounted on the trip bar 7B. Then the trip bar 7B having a semilunar cross section turns in a direction indicated by an arrow H, and engagement with the trip latch 7A is released.
(2 -2) Then, the trip latch 7A turns in a direction indicated by an arrow J round the shaft 7a by extension in a direction indicated by an arrow L of the contact pressure spring 19 (Fig. 2) acting against the impetus given by the impetus-giving spring not shown.
(2 - 3) Then, a link lever 7C turns in a direction indicated by an arrow K round a shaft 7c by contradiction of the impetus-giving spring not shown. As the trip latch 7A and the link lever 7c turn, the force of constraint between the roller 7D and the trip latch 7A generated based on the contact pressure exerted by the contact pressure spring 19 in the ON state is released. Therefore, the roller 7D comes out of a concave part of the trip latch 7A, and the trip latch 7A is urged in an opposite direction to that indicated by an arrow J by means of the impetus-giving spring not shown, thereby moving along a side surface of the trip clutch 7A. At the same time, by the extension of the contact pressure spring 19 (Fig. 2), the main shaft 15b and the first arm 15B turn in an opposite direction to that indicated by an arrow F together with the second arm 15c (Fig. 5) until the second arm comes in contact with the shaft 7c, thus the link bottom 14A and link top 14Bcome to bend. At this time, the movable conductor 15 moves to an OFF position. In addition, since the link bottom 14A and link top 14B bend and any force exerted by the contact pressure spring 19 does not act on the pin 14c, the trip latch 7A receives an impetus in an opposite direction to that indicated by an arrow J by means of the impetus-giving spring not shown, and comes in contact with a trip latch stopper 7E to stop. Thus the roller7D, which has been moving along the side surface of the trip latch 7A, comes to enter in the concave part (no numbering) of the trip latch 7A. This is the OFF state shown in Fig. 3.

Now, interlock of the drawer mechanism 11 is described.

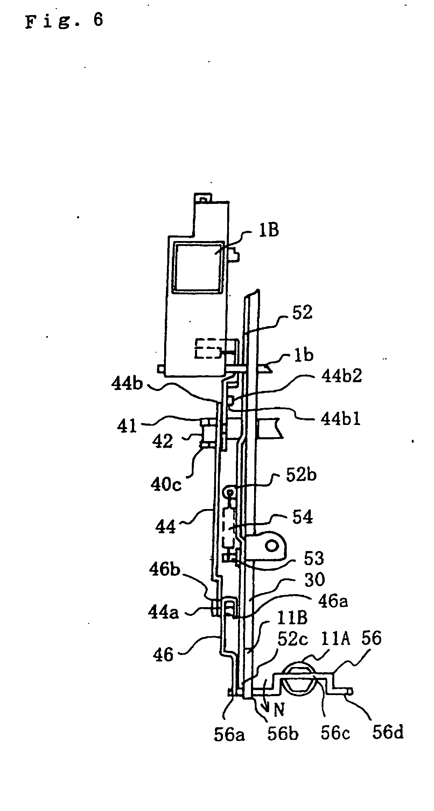

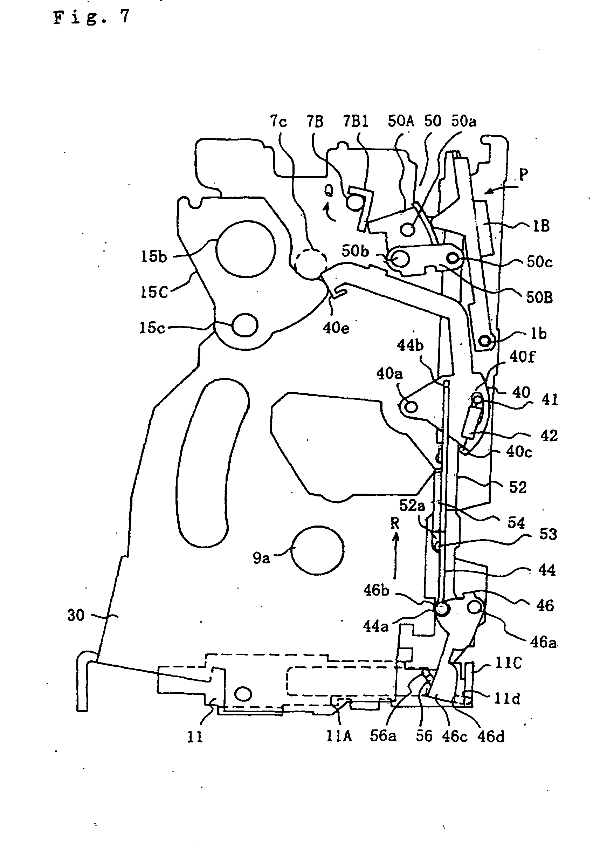

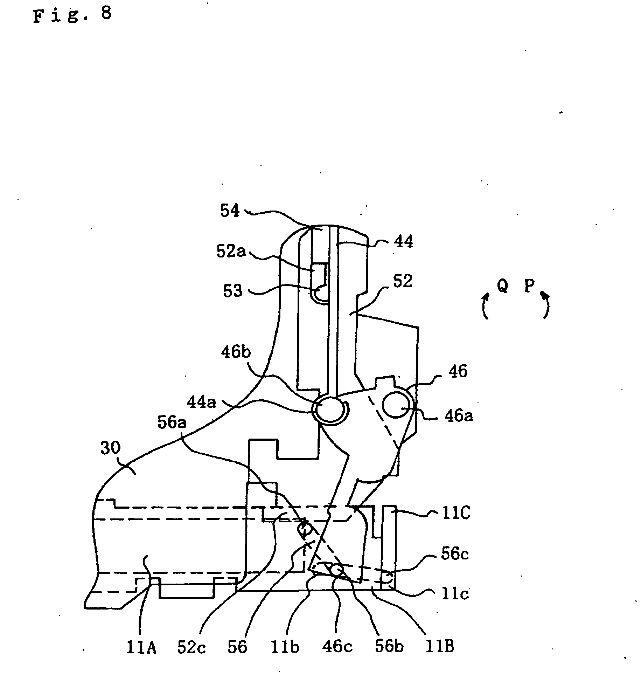

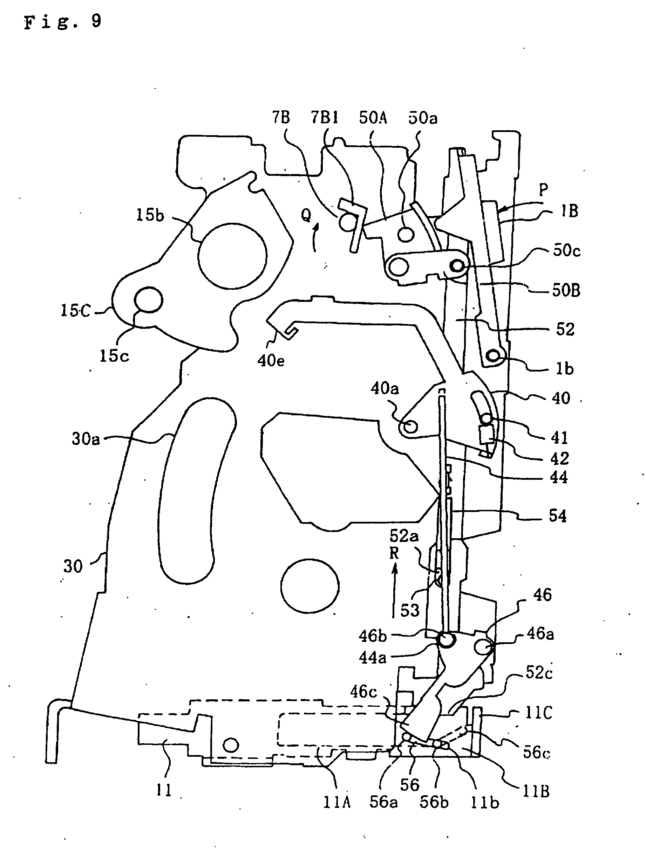

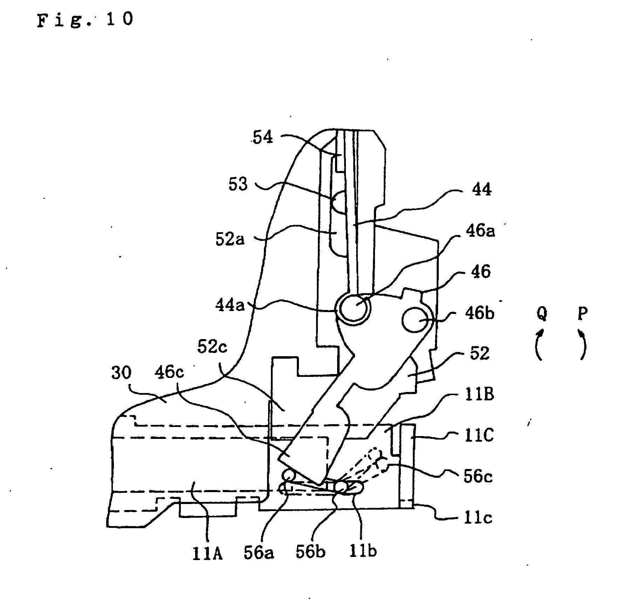

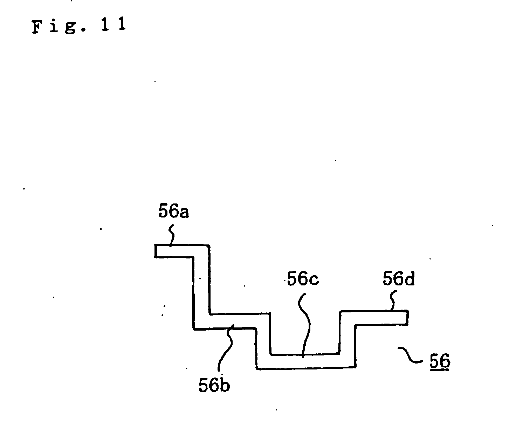

Fig. 5 is a side view of the mechanism side being in the ON state of the circuit breaker, and Fig. 6 is a front view corresponding to Fig. 5. Fig. 7 is a side view of the mechanism side being in the OFF state of the circuit breaker of Fig. 1, and Fig. 8 is an enlarged view showing an essential part of Fig. 7. Fig. 9 is a side view of the mechanism side in which the contact points of the circuit breaker of Fig. 1 are fused, and Fig. 10 is an enlarged view showing an essential part of Fig. 9. Fig. 11 is a top view of the handle lock pin shown in Figs. 5 to 10. In this respect, Figs. 5, 7 and 9 show a view of the closing spring 10 side in more detail than in Figs. 3 and 4, and illustration of the closing spring 10 is omitted. In addition, Fig. 6 shows only parts relating to the interlock for reasons of easy understanding, and illustration of a front plate 11C of the drawer mechanism 11 shown in the side view is omitted.

First, interlock of the drawer mechanism 11 being in the ON state of the circuit breaker 1 is described. Under the ON state of the circuit breaker 1, referring to Fig. 5, the movable conductor 15 is constrained at a turning-on position by means of the link 15A inserted in the pin 15c of the second arm 15c fixed to the main shaft 15b. The second arm 15c is substantially of the same configuration as the first arm 15B (Figs. 3 and 4), and fixed to the main shaft 15b at the same angle as the first arm 15 B.

Referring to Figs. 5 and 6, numeral 40 is an indicator link (a first link) formed by bending a plate-shaped metal (cast iron, brass, aluminum alloy and the like), and this indicator link displays an ON/OFF state of the movable conductor 15 on the display section 40b in accordance with position of the second arm 15c. In the cases of Figs. 5 and 6, "ON" is displayed. Numeral 41 designates a pin that is provided at the frame 30 and causes the indicator link 40 to move in a direction indicated by an arrow P (Fig. 8) along a guide slot 40d. Numeral 42 designates an impetus-giving spring that is bridged under tension between an engagement section 40c and a pin 41, and gives an impetus to the indicator link 40 toward the position shown in Fig. 5.

Numeral 44 designates an interlock liner rod (a second link) formed by bending a liner rod-shaped metal (cast iron, brass, aluminum alloy and the like). One end 44a of the interlock liner rod 44 is substantially formed into a C-shape and rotatably connected to a pin 46b provided at an interlock lever 46. The other end 44b is substantially formed into a Z-shape, and an intermediate folding part 44b1 thereof orthogonal with respect to the indicator link 40 is rotatably inserted in an aperture 40g through the indicator link 40. An end folding part 44b2 being in parallel to the indicator link 40 serves to prevent getting out.

Numeral 46 designates an interlock lever that is formed by bending a plate-shaped metal (cast iron, brass, aluminum alloy and the like), and restrains a handle lock pin 56 from rotating due to the fact that an abutment portion 46c comes in contact with another abutment portion 56a. The interlock lever 46 turns around the pin 46a provided on the frame 30.

Numeral 50 designates an off lever integrally comprised of an off trip engagement section 50A and an interlock engagement section 50B, and the off lever 50 turns round a shaft 50b provided at the frame 30. Numeral 52 designates an interlock plate connected with the interlock engagement section 50B and pin 50c. The interlock plate 52 moves against the force exerted by the impetus-giving spring 54 by manipulating the OFF button 1B, and causes the abutment portion 52c and the abutment portion 56a to be separated, thereby allowing the handle lock pin 56 to turn. Numeral 53 designates a pin provided on the frame 30. Numeral 54 designates an impetus-giving spring that is bridged between the engagement part 52b of the interlock plate 52 and the pin 53, and urges the interlock plate 52 downwardly in Figs. 5 and 6.

Now referring to Figs. 5, 6 and 11, numeral 56 designates a handle rock pin (blocking member) formed by bending a liner rod-shaped metal (cast iron, brass, aluminum alloy and the like) . The handle lock pin 56 blocks or allows insertion of the drawer handle 4 (Fig. 1) in the drawer mechanism 11. Numeral 56a designates an abutment portion coming in contact with the abutment portion 46c of the interlock lever 46 and the abutment portion 52c of the interlock plate 52. Numeral 56b designates a shaft part that is rotatably inserted through an aperture 11b of a plate 11B. Numeral 56c designates a lock part for blocking the insertion of the drawer handle. Numeral 56d designates a shaft part rotatably inserted in an aperture (not shown) of a plate (not shown). The handle lock pin 56 is urged at all times in a direction indicated by an arrow N around the shaft parts 56b, 56d by means of a torsion spring (not shown). When the abutment portion 46c and the abutment portion 52c are not in contact with the abutment portion 56a, the lock part 56c moves downward in Fig. 6 thereby enabling the drawer handle 4 to be inserted.

Now, assembling of the interlock mechanism of the drawer mechanism 11 is described.

The drawer mechanism 11, the interlock plate 52 and the handle lock pin 56 are mounted on the frame 30.

Then, the indicator link 40 is mounted on the frame 30.

Then, a C-shaped opening at one end 44a of the interlock liner rod 44 is press-fitted in the pin 46b by pulling it in an orthogonal direction to the pin 46b. Thus the interlock liner rod 44 is integrally connected with the interlock lever 46.

Then, another end 44b of the interlock liner rod 44 is inserted in the aperture 40g of the indicator link 40, and thereafter the aperture of the interlock lever 46 is fitted to the pin 46a. Further, a C-shaped washer and the like is fitted to the pin 46a, and secured thereto to prevent getting out.

The interlock liner rod 44 has only to be formed substantially into a Z-shape at one end 44b such that an intermediate fold 44b1 of the interlock liner rod 44 is rotatably inserted in the aperture 40g and an end fold 44b2 being in parallel to the indicator link 40 serves as prevention from getting out. Accordingly it is easy to form the interlock liner rod 44. Furthermore, it is preferable that the end 44b of the interlock liner rod 44 is formed into a plate shape or the same C-shape in the same manner as the other end 44a, and link-coupled with the indicator link 40 by calking, rivet binding, press fitting or the like. However, coupling by calking, rivet binding, press fitting or the like is required at both ends of the interlock liner rod 44. Therefore, number of parts or number of assembling processes increase thereby getting worse the assembling workability a much. In this sense, in the mentioned construction of the interlock liner rod 44 in Fig. 5, one end 44b thereof is formed substantially into a Z-shape, and has only to be inserted in the aperture 40g of the indicator link thereby making the assembling more efficient and easy.

Now, drawing operation for the circuit breaker is described. Described hereinafter is a normal case where the movable contact 15a and the stationary contact 16a are separated by OFF manipulation. Described also is another case of occurring any fusion where both of the moving side contact 15a and the stationary side contact 16a are not separated due to fusion or the like between both contacts 15a and 16a.

First, with reference to Figs. 5 to 8, OFF operation at the time of detecting over current (also referred to as trip operation) is described as well as the drawing operation.
(3 - 1) When depressing the OFF button 1B from the ON state shown in Fig. 5, the OFF button 1B turns in a direction indicated by an arrow P (counterclockwise in Fig. 7) round the shaft 1b and comes in contact with the off lever 50.
(3 - 2) Then, the off lever 50 turns in a direction indicated by an arrow P round the shaft 50b. Accordingly the pin 50c turns in a direction indicated by an arrow P round the shaft 50b, and the off trip engagement section 50A comes in contact with the engagement member 7B1.
(3 - 3) Then, the interlock plate 52 moves in a direction indicated by an arrow R (upward in Fig. 7) against a tensile force exerted by the impetus-giving spring 54. This movement causes the abutment portion 56a of the handle lock pin 56 to be separated from the abutment portion 52c. The abutment portion 56a of the handle lock pin 56 turns in a direction indicated by an arrow Q round the shaft part56b until the abutment portion 56a of the handle lock pin 56 comes in contact with the abutment portion 46c of the interlock lever 46.
(3 - 4) A little delayed from the mentioned operation (3 - 3), the trip bar 7B to which the engagement member 7B1 is fixed turns in a direction indicated by an arrow Q (clockwise in Fig. 7). By the OFF operations of the mentioned (2 - 1) to (2 - 3), the second arm 15c turns in a direction indicated by an arrow P round the main shaft 15b. The second arm 15c further comes in contact with an abutment portion 40e of the indicator link 40, and finally comes in contact with the shaft 7c to stop there.
   In addition, the indicator link 40 identifies whether the movable conductor 15 is in a state of ON or OFF depending upon the position of the second arm 15c. However, it is not limited to the second arm 15c, but any other member that changes in position depending upon the ON state or OFF state (any member from the movable conductor 15 to the link mechanism) can be employed. The ON/OFF state can be also identified based on the operation of the movable conductor 15, the arm 15A, the second arm 15c, the main shaft 15b, the link bottom 14A, the link top 14B, the trip latch 7A, the link lever 7C or the like.
(3 - 5) When the second arm 15C has come in contact, the indicator link 40 turns in a direction indicated by an arrow Q round the shaft 40a against a tensile force exerted by the impetus-giving spring 42.
(3 - 6) When the interlock liner rod 44 transits from the state of Fig. 5 to the state of Fig. 7 due to turning of the indicator link 40, the interlock liner rod 40 moves substantially downward. That is, the end 44a turns in a direction indicated by an arrow P round the shaft 46a, thus moving substantially downward in Figs. 5, 7 and 8. The end 44b turns in a direction indicated by an arrow Q round the shaft 40a, thus moving substantially toward lower right in Figs. 5, 7 and 8.
(3 - 7) Due to the movement of the interlock liner rod 44, the interlock lever 46 turns in a direction indicated by an arrow P round the shaft 46a. This movement allows the abutment portion 46c to be separated from the abutment portion 56a of the handle lock pin 56, changing from the mentioned state (3 - 3). The handle lock pin 56 turns in a direction indicated by an arrow Q round the shaft 56b until the lock part 56c thereof comes in contact with the stopper 11c (Fig. 8) provided inside of the front plate 11C.

Under such a state, the lock part 56c of the handle lock pin 56 is located lower in Figs . 5 to 8 than the insertion opening for the drawer handle 4 of the main screw 11A of the drawer mechanism 11. Accordingly, the drawer handle 4 can fit into the insertion opening of the main screw 11A through the insertion hole 1D, and the circuit breaker 1 can be pulled out of the drawer frame 2 just by turning the drawer handle 4.

An example of pulling out the circuit breaker 1 out of the drawer frame 2 by depressing the OFF button 1B from the above-mentioned ON state of the circuit breaker 1 was described above. It is, however, also possible to draw the circuit breaker 1 out of the drawer frame 2 from the OFF state of the circuit breaker 1 (in a state that the second arm 15c is positioned as shown in Fig. 7) as a matter of course. In this case, the interlock lever 46 is constrained at such a position as not coming in contact with the handle lock pin 56 as shown in Fig. 7. Accordingly, by depressing the OFF button 1B, the similar operations to the mentioned (3 - 1) to (3-3) are carried out, and the handle lock pin 56 comes to be in the state as shown in Figs. 7 and 8. This it becomes possible to insert the drawer handle 4 in the insertion opening of the main screw 11A. In the above-mentioned operation (3-3), however, the abutment portion 56a of the handle lock pin 56 does not come in contact with the abutment portion 46c of the interlock lever 46, but the handle lock pin 56 turns to the position shown in Figs. 7 and 8.

Now, OFF operation is described when any over current has been detected.
(4-1) When the over current release device, now shown, detects the over current by an output from the current detecting CT21 of the circuit breaker 1 (Fig. 2), a release coil section not shown, which is comprised of an electromagnetic relay, etc. comes to operate and causes the engagement member 7B1 to turn in a direction indicated by an arrow Q.
(4-2) On and from the above-mentioned (4-1), the similar operation to the above-mentioned (3-3) to (3-6) take place. Finally, the indicator link 40, the interlock liner rod 44, the interlock lever 46, the interlock plate 52, the handle lock pin 56, etc. come to the state shown Figs. 7 and 8.
   Referring to Fig. 2, in the case of occurring any over current, as the magnitude of the over current is larger, the more electromagnetic repulsive force in a direction to move the movable conductor 15 toward the OFF position acts between the movable contact 15a and the body side main contact 16a as well as between the movable conductor 15 and the body side conductor. That is, an electromagnetic repulsive force is generated in addition to the impetus produced in the above-mentioned (4-2) and given based on the extension of the contact pressure spring 19.
(4-3) When the generated over current is large, the electromagnetic repulsive force is markedly strong in proportion to the impetus given by the contact pressure spring 19, and causes the movable conductor 15 to move even more quickly and instantaneously than in the foregoing OFF operation (4-2). Referring to Figs. 5 to 8, an impact strength upon the second arm 15C colliding with the abutment portion 40e of the indicator link 40 is extremely greater than in the OFF operations in the mentioned process (2-1) to (2-3).
(4-4) When the second arm 15C collides with the indicator link 40, the indicator link 40, the interlock liner rod 44 and the interlock lever 46 move respectively.
   In this process, first, the abutment portion 46d of the interlock lever 46 (Fig. 7) comes in contact with the stopper 11d (the second stopper) (Fig. 7) provided on the inside surface of the front plate 11C to stop turning in a direction indicated by an arrow P.
(4-5) Immediately thereafter, the abutment portion 40f forming one end of the guide slot 40d at the indicator link 40 comes in contact with the pin 41, and stops turning in a direction indicated by an arrow Q. Further, movement of the movable conductor 15 caused by the electromagnetic repulsive force is faster than operation of the electromagnetic relay, not shown, at the over current release device, not shown.
(4-6) After the mentioned process (4-4) and (4-5), finally the indicator link 40, the interlock liner rod 44 and the interlock lever 46 come to a position shown in Fig. 7.

Note that the interlock liner rod 44 is not a plate but a flexible liner rod so that a compressive force acts substantially in a longitudinal direction of the interlock liner rod 44 during the mentioned process (4-4) and (4-5). This compressive force causes the interlock liner rod 44 to bow and flex, absorbing the impact force. Accordingly, materials of low rigidity and of small size can be employed as the indicator link 40, the off lever 50, the interlock lever 46 and the like. Further, a noteworthy advantage is assured such that the shaft 40a and insertion hole therefor, the pin 46a and insertion hole therefor, the pin 46b and the end 44a, and the aperture 40g and the end 44b forming turning centers of them can be small-sized. In particular, note that the pin 46b and the end 44a, of which turning center is not provided on the frame 30, as well as a link connection part of the aperture 40g and the other end 44b can be advantageously small-sized.

Furthermore, the interlock lever 46 and the front panel 11C are brought into contact before the indicator link 40 and the off lever 50, which are rigid bodies as compared with a plate-shaped liner rod, come in contact. Accordingly, the impact force caused by the contact is absorbed to a certain extent by means of the interlock liner rod 44, and thereafter the indicator link 40 and the pin 41 are bought into contact. Therefore, materials of low rigidity and of small size can be employed as the indicator link 40 and the rotational center 40a.

Now, the case where the contact points are fused is described with reference to Figs. 5, 6, 9, and 10.
(5-1) When depressing the OFF button 1B from the ON state shown in Fig. 5, the OFF button 1B turns in a direction indicated by an arrow P (in a counterclockwise direction in Fig. 9) round the shaft 1b, and eventually comes in contact with the off lever 50.
(5-2) Then, the off lever 50 turns in a direction indicated by an arrow P round the shaft 50b. Therefore, the pin 50c turns in a direction indicated by an arrow P round the shaft 50b, and the off trip engagement section 50A comes in contact with the engagement member 7B1.
(5-3) Subsequently, due to the rotation of the pin 50c, the interlock plate 52 moves in a direction indicated by an arrow R against a tensile force exerted by the impetus-giving spring 54. This movement causes the abutment portion 56a of the handle lock pin 56 to be separated from the abutment portion 52c, whereby the abutment portion 56a of the handle lock pin 56 turns in a direction indicated by an arrow Q round the shaft 56b until coming in contact with the abutment portion 46c of the interlock lever 46. That is, the handle lock pin 56 slightly turns in a direction indicated by an arrow Q round the shaft 56b from a position illustrated by the one-dot broken line in Fig. 10 to a position illustrated by the straight line or broken line (position shown in Fig. 9).
(5-4) A little delayed from the mentioned operation (5-3), the trip bar 7B onto which the engagement member 7B1 is fixed turns in a direction indicated by an arrow Q (clockwise in Fig. 7). In the case, however, where the movable contact 15a and the body side main contact 16a are fused and, moreover, the fusion strength is larger than extension force exerted by the contact pressure spring 19, any impetus in a direction indicated by an arrow L is not generated at the first arm 15B. The trip latch 7A is urged at all times in an opposite direction to that indicated by an arrow J (Fig. 4) by means of the impetus-giving spring (not shown). Therefore any of the trip latch 7A, the link lever 7C, the link bottom 14A and the link top 14B does not move remaining in the state shown in Fig. 4.
   In effect, under the state of depressing the OFF button 1B, the release mechanism 7, the turning-on mechanism 8, the link bottom 14A, the link top 14B come to be in the state as shown in Fig. 4 except that the trip bar 7B turns. On the other hand, the handle lock pin 56 slightly turns as shown in Fig. 10 and comes in contact with the interlock plate 52 to stop there. In this state, the manipulation handle 4 cannot be inserted through the insertion hole 1D (Fig. 1) in the insertion hole of the main screw 11A (not shown).
(5-5) Thereafter, when stopping the depression of the OFF button 1B, the trip bar 7B turns due to impetus given by an impetus-giving spring, not shown, in an opposite direction to that indicated by an arrow P, and comes to be in the state shown in Fig. 4. The off lever 50, the interlock plate 52, the handle lock pin 56 become in the state shown in Fig. 5 as well.

As described above, in the case where the movable contact 15a is not open, manipulation of drawing the circuit breaker 1 is prohibited even if the OFF button 1B is depressed. Consequently it is electrically very safe.

Furthermore, the interlock plate 52 and the interlock lever 46 come in contact with one handle lock pin 56 to restrain the turning thereof. Therefore structure of the handle lock pin 56 can be formed simple as compared with the case of providing the handle lock pins 56 (blocking member) corresponding to each of the interlock plate 52 and the interlock lever 46 respectively.

In addition, when the off lever 50 does not turn, the handle lock pin 56 comes in contact with the plate-shaped interlock plate 52 to be restrained from moving. Therefore any material of low rigidity can be used as the interlock lever 46, the interlock liner rod 44, the indicator link 40 and the rotational centers thereof 40a, 50b, 46a, 46b, 44g. The contact force is exerted to these members from the handle lock pin 56 only when the off lever 50 turns.

Further, the drawer-type circuit breaker according to the invention includes the following additional features and advantages.

That is, it is preferable that the drawer-type circuit breaker includes: a first link moving interlocking with the mentioned movable contact or any member at the mentioned link mechanism; a second link one end of which is connected to the mentioned first link, and which is formed of a liner rod moving in a longitudinal direction thereof as the mentioned first link moves; and an interlock lever to which the other end of the mentioned second link is connected, and which turns round a fulcrum thereof as the mentioned second linkmoves, and the other end of which comes in contact with the blocking member and constrain the mentioned blocking member at a blocking position when the mentioned movable contact is at the ON position. As a result, the mentioned second link flexes to be capable of absorbing an impact force, and therefore any material of low rigidity can be employed as the link articulation, the mentioned first link or the mentioned interlock lever.

In the drawer-type circuit breaker according to the invention, it is also preferable that one end of the mentioned second link is bent and formed substantially into a Z-shape, and an intermediate part of the Z-shape is inserted into an insertion aperture of the mentioned first link and connected to serve as a link shaft. As a result, construction of the drawer-type circuit breaker is simple and superior in assembling.

It is also preferable that the drawer-type circuit breaker according to the invention includes : a first stopper coming in contact with the mentioned first link and stopping the mentioned first link when the mentioned first link excessively moves due to any impact force at the time of OFF operation; and a second stopper coming in contact with the mentioned interlock lever and stopping the mentioned interlock lever before the mentioned first link comes in contact with the mentioned first stopper when the mentioned interlock lever excessively moves due to any impact force at the time of OFF operation. As a result, any material of low rigidity can be employed as the mentioned first link.

It is also preferable that the drawer-type circuit breaker according to the invention includes interlock means for causing the mentioned circuit breaker to conduct OFF-operation and causing the circuit breaker to disengage with the mentioned blocking member by manipulation from outside; and in which the mentioned blocking member is arranged so as to permit the mentioned manipulation handle to be inserted when the mentioned interlock means is manipulated from outside and the mentioned interlock lever is at a position of not constraining the mentioned blocking member. As a result, the mentioned interlock means and the mentioned interlock lever commonly use the mentioned blocking member, making it possible to be smaller in size.

In the drawer-type circuit breaker according to the invention, it is also preferable that the mentioned interlock means is provided with an OFF button manipulated from outside, and an interlock plate including an abutment portion coming in contact with the mentioned blocking member; and in which it is arranged such that the mentioned abutment portion and the mentioned blocking member are not in contact at the time of manipulating the mentioned OFF button, and the mentioned abutment portion comes in contact with the mentioned blocking member and the other end of the mentioned interlock lever is not in contact with the mentioned blocking member at the time of not manipulating the mentioned OFF button. As a result, any material of low rigidity can be employed as the link articulation, the mentioned first link and the mentioned interlock lever.

## Claims

1. A drawer-type circuit breaker comprising:
a circuit breaker (1) in which ON operation of an open/close mechanism (7, 8, 9) causes a mechanism (14A, 14B, 15A, 15B, 15C) to extend, thereby moving a movable conductor (15) to an ON position where a moving contact point (15a) and a stationary contact point (16a) come in contact under a predetermined contact pressure, and OFF operation of said open/close mechanism (7, 8, 9) causes a force of constraint between said mechanism (14A, 14B, 15A, 15B, 15C) and a trip latch (7A) based on said contact pressure to be released, thereby bending said mechanism (14A, 14B, 15A, 15B, 15C) and moving said movable conductor (15) to OFF position; a drawer frame (2) retractably accommodating said circuit breaker (1); and a drawer mechanism section (11) enabling said circuit breaker (1) to move in pulling-out direction and inserting direction within said drawer frame (2) by inserting a manipulation handle (4) from outside and operating the manipulation handle (4); wherein a blocking member (56) for preventing insertion of said manipulation handle (4), when said movable conductor (15) is at the ON position, is provided; and **characterized by** further comprising:
a first mechanical link (40) connectable with said movable conductor (15) or any member of said mechanism (14A, 14B, 15A, 15B, 15C), and moving between two positions in accordance with the two positions ON and OFF of said movable conductor (15);
a second link (44) one end of which is connected to said first link (40), and which is formed of a wire rod moving in a longitudinal direction thereof as said first link (40) moves; and
an interlock lever (46) to one end of which the other end (44a) of said second link (44) is connected, wherein the interlock lever (46) turns around a fulcrum when said second link (44) moves, and the other end (46C) of the lever (46) comes in contact with the blocking member (56) and constrains said blocking member (56) at a blocking position when said movable conductor (15) is at the ON position, thus preventing insertion of the said manipulation handle (4).

2. The drawer-type circuit breaker according to claim 1, wherein one end (44b2) of said second link (44) is bent and formed substantially into a Z-shape, and an intermediate part (44b1)of the Z-shape is inserted into an insertion aperture (40g) of said first link (40) and connected to serve as a link shaft.

3. The drawer-type circuit breaker according to claim 1 or 2, further comprising:
a first stopper (41) coming in contact with said first link (40) and stopping said first link (40) when said first link (40) excessively moves due to any impact force at the time of OFF operation; and
a second stopper (11d) coming in contact with said interlock lever (46) and stopping said interlock lever (46) before said first link (40) comes in contact with said first stopper (11d) when said interlock lever (46) excessively moves due to any impact force at the time of OFF operation.

4. The drawer-type circuit breaker according to claim 1, 2 or 3, further comprising interlock means (52) for causing said circuit breaker (1) to conduct OFF-operation and causing the circuit breaker (1) to disengage with said blocking member (56) by manipulation from outside;
wherein said blocking member (56) is arranged so as to permit said manipulation handle (4) to be inserted when said interlock means (52) is manipulated from outside and said interlock lever (46) is at a position of not constraining said blocking member (56).

5. The drawer-type circuit breaker according to claim 4, wherein said interlock means (52) is provided with an OFF button (1B)manipulated from outside and an interlock plate (52) including a contact part (52c) coming in contact with said blocking member (56);
wherein said contact part (52c) and said blocking member (56) are not in contact at the time of manipulating said OFF button (1B), and said contact part (52C) comes in contact with said blocking member (56) and the other end (46c) of said interlock lever (46) is not in contact with said blocking member (56) at the time of not manipulating said OFF button (1B).

## Patentansprüche

1. Überlastschalter des Einschub-Typs, mit:
einem Überlastschalter (1), bei dem ein AN-Betrieb eines Öffnungs-/Schließmechanismus (7, 8, 9) bewirkt, dass ein Mechanismus (14A, 14B, 15A, 15B, 15C) ausfährt, wodurch ein bewegbarer Leiter (15) in eine AN-Position bewegt wird, in der ein sich bewegender Kontaktpunkt (15a) und ein feststehender Kontaktpunkt (16a) unter einem vorbestimmten Kontaktdruck in Kontakt gelangen, und ein AUS-Betrieb des Öffnungs-/Schließmechanismus (7, 8, 9) eine Zwangskraft zwischen dem Mechanismus (14A, 14B, 15A, 15B, 15C) und einem Auslöser (7A) bewirkt, die auf dem zu lösenden Kontaktdruck basiert, wodurch der Mechanismus (14A, 14B, 15A, 15B, 15C) gebogen wird und der bewegbare Leiter (15) in eine AUS-Position bewegt wird; einem Einschubrahmen (2), der den Überlastschalter (1) einschiebbar aufnimmt; und einem Einschubmechanismus-Abschnitt (11), der ermöglicht, dass sich der Überlastschalter (1) in eine Herauszieh-Richtung und eine Einführ-Richtung in dem Einschubrahmen (2) bewegt, durch ein Einführen eines Handhabungshandgriffs (4) von außen, und einem Bedienen des Handhabungshandgriffs (4); wobei ein Blockierelement (56) zur Verhinderung des Einführens des Handhabungshandgriffs (4), wenn der bewegbare Leiter (15) in der AN-Position ist, vorgesehen ist; und **dadurch gekennzeichnet, dass** er ferner aufweist:
ein erstes mechanisches Verbindungsglied (40), das mit dem bewegbaren Leiter (15) oder einem Element des Mechanismus (14A, 14B, 15A, 15B, 15C) verbindbar ist, und sich zwischen zwei Positionen in Übereinstimmung mit den zwei AN- und AUS-Positionen des bewegbaren Leiters (15) bewegt;
ein zweites Verbindungsglied (44), dessen eines Ende mit dem ersten Verbindungsglied (40) verbunden ist, und das aus einem Walzdraht ausgebildet ist, der sich in einer Längsrichtung davon bewegt, wenn sich das erste Verbindungsglied (40) bewegt; und
einem Verriegelungshebel (46) mit dessen einem Ende das andere Ende (44a) des zweiten Verbindungsglieds (44) verbunden ist, wobei der Verriegelungshebel (46) einen Hebelpunkt herumdreht, wenn sich das zweite Verbindungsglied (44) bewegt, und das andere Ende (46C) des Hebels (46) mit dem Blockierelement (56) in Kontakt gelangt und das Blockierelement (56) in eine Blockierposition zwingt, wenn der bewegbare Leiter (15) in der AN-Position ist, wodurch ein Einführen des Handhabungshandgriffs (4) verhindert wird.

2. Überlastschalter des Einschub-Typs nach Anspruch 1, bei dem ein Ende (44b2) des zweiten Verbindungsglieds (44) gebogen und in einer im Wesentlichen Z-Form ausgebildet ist, und ein Zwischenteil (44b1) der Z-Form in eine Einführöffnung (40g) des ersten Verbindungsglieds (40) eingeführt und verbunden ist, um als eine Verbindungsglied-Welle zu dienen.

3. Überlastschalter des Einschub-Typs nach Anspruch 1 oder 2, ferner mit:
einem ersten Halteelement (41), das mit dem ersten Verbindungsglied (40) in Kontakt gelangt und das erste Verbindungsglied (40) anhält, wenn sich das erste Verbindungsglied aufgrund von einer Stoßkraft zum Zeitpunkt des AUS-Betriebs übermäßig bewegt; und
einem zweiten Halteelement (11d), das mit dem Verriegelungshebel (46) in Kontakt gelangt und den Verriegelungshebel (46) anhält, bevor das erste Verbindungsglied (40) mit dem ersten Halteelement (11d) in Kontakt gelangt, wenn sich der Verriegelungshebel (46) aufgrund von einer Stoßkraft zum Zeitpunkt des AUS-Betriebs übermäßig bewegt.

4. Überlastschalter des Einschub-Typs nach Anspruch 1, 2 oder 3, ferner mit:
einer Verriegelungseinrichtung (52), um zu bewirken, dass der Überlastschalter (1) einen AUS-Betrieb durchführt, und die bewirkt, dass der Überlastschalter (1) mit dem Verriegelungselement (56) durch eine Handhabung von außen außer Eingriff gelangt;
wobei das Blockierelement (56) so angeordnet ist, dass ein Einführen des Handhabungshandgriffs (4) zugelassen wird, wenn die Verriegelungseinrichtung (52) von außen gehandhabt wird, und der Verriegelungshebel (46) in einer Position ist, die das Blockierelement (56) nicht einzwängt.

5. Überlastschalter des Einschub-Typs nach Anspruch 4, bei dem die Verriegelungseinrichtung (52) mit einer AUS-Taste (1B), die von außen gehandhabt wird, und einer Verriegelungsplatte (52) mit einem Kontaktteil (52c) versehen ist, der mit dem Blockierelement (56) in Kontakt gelangt;
wobei der Kontaktteil (52c) und das Blockierelement (56) zum Zeitpunkt der Handhabung der AUS-Taste (1B) nicht in Kontakt stehen, und der Kontaktteil (52c) mit dem Blockierelement (56) in Kontakt gelangt, und das andere Ende (46c) des Verriegelungshebels (46) sich nicht mit dem Blockierelement (56) in Kontakt befindet, zum Zeitpunkt, wenn die AUS-Taste (1B) nicht gehandhabt wird.

## Revendications

1. Disjoncteur enfichable comprenant:
un disjoncteur (1) dans lequel une opération en service d'un mécanisme d'ouverture/fermeture (7, 8, 9) amène un mécanisme (14A, 14B, 15A, 15B, 15C) à s'étendre, en déplaçant ainsi un conducteur mobile (15) à une position en service où un point de contact mobile (15a) et un point de contact stationnaire (16a) viennent en contact sous une pression de contact prédéterminée, et une opération hors service dudit mécanisme d'ouverture/fermeture (7, 8, 9) provoque le relâchement d'une force de contrainte entre ledit mécanisme (14A, 14B, 15A, 15B, 15C) et un loquet de déclenchement (7A) basée sur ladite pression de contact, en courbant ainsi ledit mécanisme (14A, 14B, 15A, 15B, 15C) et
en amenant ledit conducteur mobile (15) à la position hors service; un support (2) recevant d'une manière rétractable ledit disjoncteur (1); et une section de mécanisme de support (11) permettant audit disjoncteur (1) de se déplacer dans la direction d'extraction et la direction d'insertion dans ledit support (2) en insérant une poignée de manipulation (4) de l'extérieur et en actionnant la poignée de manipulation (4); où un élément de blocage (56) pour empêcher l'insertion de ladite poignée de manipulation (4), lorsque ledit conducteur mobile (15) se trouve à la position en service, est réalisé; et **caractérisé en ce qu'**il comprend en outre:
un premier élément de liaison mécanique (40) pouvant être connecté audit conducteur mobile (15) ou n'importe quel élément dudit mécanisme (14A, 14B, 15A, 15B, 15C) et se déplaçant entre deux positions en accord avec les deux positions en service et hors service dudit conducteur mobile (15);
un deuxième élément de liaison (44) dont une extrémité est reliée audit premier élément de liaison (40) et qui est constitué d'un fil rond laminé se déplaçant dans sa direction longitudinale lorsque ledit premier élément de liaison (40) se déplace; et
un levier d'interverrouillage (46) à une extrémité duquel l'autre extrémité (44a) dudit deuxième élément de liaison (44) est reliée, où le levier d'interverrouillage (46) tourne autour d'un point d'appui lorsque ledit deuxième élément de liaison (44) se déplace, et l'autre extrémité (46C) du levier (46) vient en contact avec l'élément de blocage (56) et contraint ledit élément de blocage (56) à une position de blocage lorsque ledit conducteur mobile (15) se trouve à la position en service en empêchant ainsi l'insertion de ladite poignée de manipulation (4).

2. Disjoncteur enfichable selon la revendication 1, où une extrémité (44b2) dudit deuxième élément de liaison (44) est courbée et est réalisée sensiblement en une forme en Z, et une partie intermédiaire (44b1) de la forme en Z est insérée dans une ouverture d'insertion (40g) dudit premier élément de liaison (40) et est reliée de façon à servir d'axe de liaison.

3. Disjoncteur enfichable selon la revendication 1 ou 2, comprenant en outre:
une première butée d'arrêt (41) venant en contact avec ledit premier élément de liaison (40) et arrêtant ledit premier élément de liaison (40) lorsque ledit premier élément de liaison (40) se déplace excessivement à cause d'une force d'impact au moment de l'opération hors service; et
une deuxième butée d'arrêt (11d) venant en contact avec ledit levier d'interverrouillage (46) et arrêtant ledit levier d'interverrouillage (46) avant que ledit premier élément de liaison (40) ne vienne en contact avec ladite première butée d'arrêt (11d) lorsque ledit levier d'interverrouillage (46) se déplace excessivement par suite d'une force d'impact au moment de l'opération de mise hors service.

4. Disjoncteur enfichable selon la revendication 1, 2 ou 3, comprenant en outre un moyen d'interverrouillage (52) pour amener ledit disjoncteur (1) à effectuer une opération de mise hors service et pour amener le disjoncteur (1) à sortir de la prise avec ledit élément de verrouillage (56) par une manipulation de l'extérieur;
où ledit élément de blocage (56) est agencé de façon à permettre l'insertion de ladite poignée de manipulation (4) lorsque ledit moyen d'interverrouillage (52) est manipulé de l'extérieur, et ledit levier d'interverrouillage (46) se trouve à une position ne contraignant pas ledit élément de blocage (56).

5. Disjoncteur enfichable selon la revendication 4, où ledit moyen d'interverrouillage (52) présente un bouton de mise hors service (1B) manipulé depuis l'extérieur et une plaque d'interverrouillage (52) incluant une partie de contact (52c) venant en contact avec ledit élément de blocage (56);
où ladite partie de contact (52c) et ledit élément de blocage (56) ne sont pas en contact au moment de la manipulation dudit bouton de mise hors service (1B), et ladite partie de contact (52C) vient en contact avec ledit élément de blocage (56) et l'autre extrémité (46c) dudit levier d'interverrouillage (46) n'est pas en contact avec ledit élément de blocage (56) au moment de la non manipulation dudit bouton de mise hors service (1B).
